# EUROPÄISCHE PATENTSCHRIFT

(11) **EP 1 075 410 B1**
(45) Veröffentlichungstag und Bekanntmachung des Hinweises auf die Patenterteilung: **27.03.2002**
(21) Anmeldenummer: 99934461.7
(22) Anmeldetag: 05.05.1999
(51) Int. Cl.: B62D 1/00

(54) **VORRICHTUNG ZUR BEFESTIGUNG EINER NABE AUF EINER WELLE, INSBESONDERE EINER LENKRADNABE AUF EINER LENKSÄULE**
DEVICE FOR FIXING A HUB ON A SHAFT, ESPECIALLY A STEERING WHEEL HUB ON A STEERING COLUMN
DISPOSITIF POUR FIXER UN MOYEU SUR UN ARBRE, NOTAMMENT UN MOYEU DE VOLANT SUR UNE COLONNE DE DIRECTION

(30) Priorität: 05.05.1998 DE 29808420 U
(43) Veröffentlichungstag der Anmeldung: 14.02.2001
(73) Patentinhaber: Takata-Petri AG, 63743 Aschaffenburg (DE)
(72) Erfinder: HODAC, Hung, D-63843 Niedernberg (DE)
(74) Vertreter: Baumgärtel, Gunnar, Dr.
(86) Internationale Anmeldenummer: DE9901407
(87) Internationale Veröffentlichungsnummer: WO9956998

(56) Entgegenhaltungen:
- DE-A- 19 616 234
- DE-U- 29 808 420

## Beschreibung

Die Erfindung betrifft eine Vorrichtung zur Befestigung einer Lenkradnabe auf einer Lenksäule nach dem Oberbegriff des Anspruchs 1. Eine derartige Vorrichtung ist zum Beispiel aus der EP 0706929 A1 bekannt.

Aus der DE 196 16 234 A1 ist eine Vorrichtung für die Befestigung einer Nabe auf einer Welle, insbesondere einer Lenkradnabe auf einer Lenksäule mit einer quer in die Welle eingreifenden Schraube bekannt. Die Schraube ist in der Nabe geführt und greift mit einem kegelförmigen Abschnitt partiell in die Welle bzw. die Lenksäule ein. Die Welle ist mit einer Kerbverzahnung versehen, der eine entsprechende Verzahnung in der Nabe zugeordnet ist.

Bei dieser Verbindungsart ist eine genaue Fertigung der einzelnen Verbindungsteile erforderlich, um die Nabe spielfrei auf der Welle zu befestigen.

Aus der EP 0 706 929 A1 ist eine Vorrichtung zur Befestigung einer Nabe auf einer Lenksäule mittels einer quer zur Lenksäule verlaufenden Befestigungsschraube bekannt, wobei die Befestigungsschraube in der Nabe geführt ist und einen kegelförmigen Abschnitt zum mittigen Eingreifen in eine Nut der Lenksäule aufweist. Außerdem liegt die Nabe oberhalb und unterhalb der Nut an der Welle an.

Aus der EP 0 088 509 A1 und der EP 0 339 380 A1 ist jeweils eine Vorrichtung zur koaxialen drehfesten Verbindung zweier miteinander drehbarer Teile bekannt, wobei ein Gewindestift, der an einem ersten der beiden Teile befestigt ist, mit einem kegelförmigen Abschnitt außermittig in eine zugeordnete Nut des anderen Teiles eingreift.

Der Erfindung liegt die Aufgabe zugrunde, eine spielfreie Verbindung zwischen Lenksäule und einer Lenkradnabe mit geringem Aufwand zu erzielen.

Erfindungsgemäß wird das mit den Merkmalen des Anspruchs 1 erreicht.

Bei einer Vorrichtung zur Befestigung einer Lenkradnabe auf einer Lenksäule, mittels einer quer zur Lenksäule verlaufenden Befestigungsschraube, die in der Nabe geführt ist und einen kegelförmigen Abschnitt zum Eingreifen in eine Rille oder Nut der Lenksäule aufweist, liegt erfindungsgemäß die Achse der Schraube bei axialer Anlage der Nabe an einem Anschlag der Lenksäule höher als die Rillen- oder Nutmitte der Lenksäule, und die Nabe liegt oberhalb und unterhalb der Rille oder Nut formschlüssig an der Welle an. Der Kegelwinkel des kegelförmigen Abschnitts der Schraube ist dabei kleiner als 12°, um Selbsthemmung zu erzielen.

Wegen der höherliegenden Achse der Schraube wird die Nabe beim Eingreifen des kegelförmigen Teils der Schraube in die Nut der Lenksäule gegen den Anschlag gedrückt. Damit ist das Axialspiel beseitigt. Durch die formschlüssige Anlage der Nabe an der Lenksäule sowohl ober- als auch unterhalb der Rille bzw. Nut in der Lenksäule wird eine Kippen der Nabe um die Achse der Schraube verhindert.

Es ist zweckmäßig, daß die Achse der Schraube 0,5 mmm höher als die Nutmitte der Lenksäule liegt.

In einer ersten Ausführungsform ist oberhalb und unterhalb der Rille oder Nut zwischen der Lenksäule und der Nabe eine Verzahnung vorgesehen, mittels derer der Formschluß zwischen Lenksäule und Nabe hergestellt wird. Bei dieser Ausführungsform ist der Anschlag eben oder kegelförmig.

In einer zweiten Ausführungsform ist die Lenksäule im Befestigungsbereich der Nabe als Prisma ausgebildet, dem sich ein pyramidenstumpfförmiger Abschnitt anschließt, der sich nach unten auf einen größeren Querschnitt erweitert, wobei das Prisma und der pyramidenstumpfförmige Abschnitt dieselbe Anzahl Kanten aufweisen, die zueinander fluchten. Die Nabe weist eine entsprechend ausgebildete Aufnahmeöffnung für die Herstellung des Formschlusses zwischen Lenksäule und Nabe auf, wobei in dieser Ausführungsform der pyramidenstumpfförmige Abschnitt den axialen Anschlag für die Nabe darstellt.

In einer bevorzugten Ausgestaltung der zweiten Ausführungsform weisen das Prisma und der pyramidenstumpfförmige Abschnitt jeweils sechs Kanten auf, Weiterhin ist es zweckmäßig, daß die Kanten abgerundet sind.

Die Nut oder Rille ist zweckmäßig so ausgebildet, daß die Schraube die Lenksäule nach ihrer Arretierung linienförmig berührt.

Weiterhin ist es zweckmäßig, daß eine Schraube mit Rechtsgewinde in Eindrehrichtung der Schraube gesehen auf der rechten Seite der Achse der Lenksäule liegt. Dadurch wird die Nabe auf den Anschlag der Lenksäule gedrückt.

Die Schraube ist zweckmäßig an beiden Enden des Kegelbereichs in zylindrischen Lagern gelagert. Gegenüber einer Lagerung im Gewinde wird bei gleichen Toleranzen eine einfachere Fertigung erzielt.

Die Erfindung soll in einem Ausführungsbeispiel anhand von Zeichnungen erläutert werden. Es zeigen:

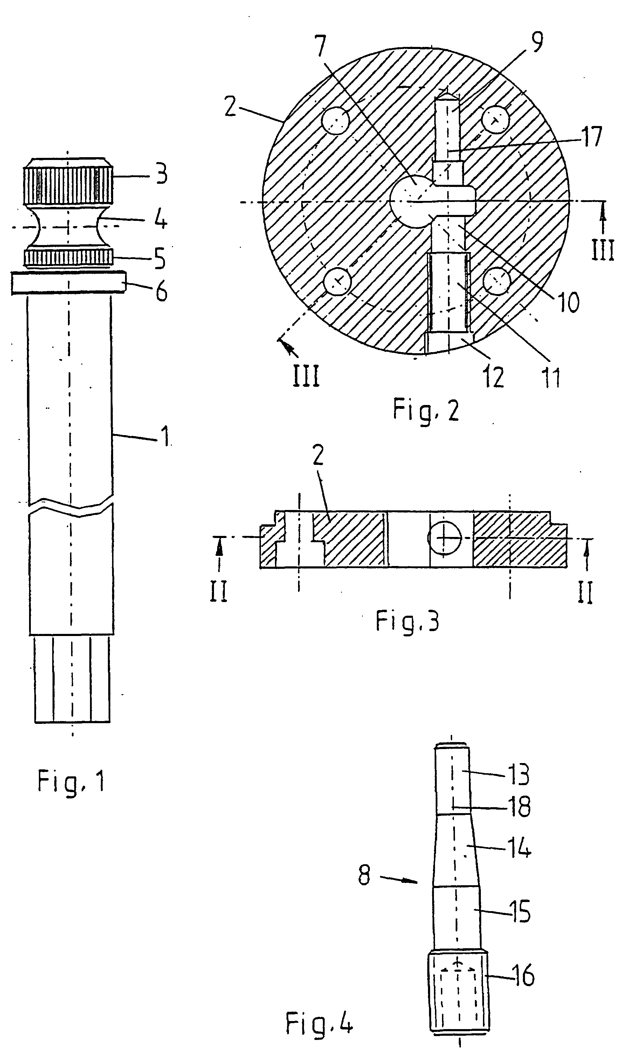

- Fig. 1: eine Seitenansicht einer ersten Ausführungsform einer Lenksäule;
- Fig. 2: einen Schnitt durch ein Nabenteil nach Fig. 3 in Richtung der Pfeile II - II gesehen;
- Fig. 3: einen Querschnitt durch das Nabenteil nach Fig. 2 in Richtung der Pfeile III - III gesehen;
- Fig. 4: eine Ansicht der Schraube zum Befestigen des Nabenteils auf der Lenksäule;
- Fig. 5: die Lenksäule nach Fig. 1 mit dem aufgesetzten Nabenteil;
- Fig. 6: eine Seitenansicht einer zweiten Ausführungsform einer Lenksäule;
- Fig. 7: eine Draufsicht auf die Lenksäule nach Fig. 6.

Eine Lenksäule 1 weist an ihrem oberen Ende eine Aufnahme für ein Nabenteil 2 eines Lenkrades auf. Die Aufnahme ist mit einer Kerbverzahnung 3 versehen, der sich eine umlaufende Nut 4 anschließt, unterhalb derer eine weitere Kerbverzahnung 5 vorgesehen ist. Unterhalb der letztgenannten Kerbverzahnung ist ein Anschlag 6 für die axiale Anlage des Nabenteils 2 angeordnet. Den Kerbverzahnungen 3 und 5 sind entsprechende nicht dargestellte Kerbverzahnungen in einer Bohrung 7 im Nabenteil 2 zugeordnet.

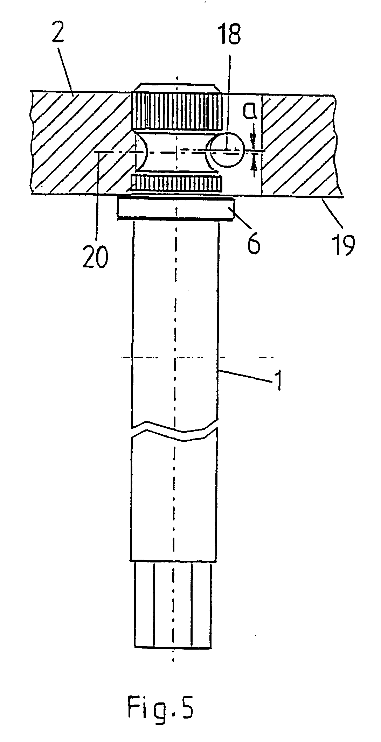

Das Nabenteil 2 weist eine quer zur Bohrung 7 verlaufende Aufnahme für eine Schraube 8 auf. Diese Aufnahme weist ein zylindrisches Lager 9, einen hohlkegelförmigen Abschnitt 10, ein weiteres zylindrisches Lager 11 sowie einen Gewindeabschnitt 12 auf, denen in der genannten Reihenfolge Abschnitte 13, 14, 15 und 16 der Schraube 8 zugeordnet sind. Die Längsachse 17 der Aufnahme und damit die Längsachse 18 der in dieser geführten Schraube 8 liegen so, daß nach dem Aufsetzen des Nabenteils 2 auf die Lenksäule 1 und bei Anlage der Unterseite 19 des Nabenteils 2 am Anschlag 6, die Achse 18 der Schraube 8 um ein Maß a (Fig. 5) höher als die Nutmitte 20 der Lenksäule 1 liegt. Dadurch wird erreicht, daß der kegelförmige Abschnitt 14 der Schraube 8 bei Einführung in die Nut 4 zunächst an deren Oberseite angedrückt wird, und somit das Nabenteil 2 bei weiterem Eindrehen der Schraube 8 gegen den Anschlag 6 gedrückt wird. Damit ist das axiale Spiel des Nabenteils auf der Lenksäule beseitigt. Zusätzlich wird das Kippen des Nabenteils auf der Lenksäule durch die beiderseits der Nut 4 vorhandene Kerbverzahnung 3, 5 verhindert.

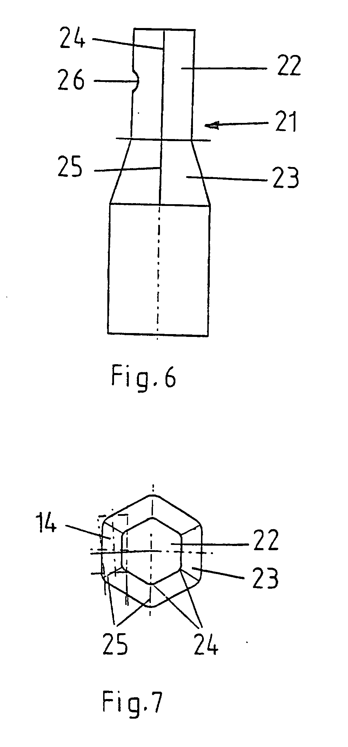

Die in den Figuren 6 und 7 ist eine Lenksäule 21 dargestellt, die im oberen Bereich als sechskantiges Prisma 22 ausgebildet ist, dem sich nach unten ein sechskantiger pyramidenstumpfförmiger Abschnitt 23 anschließt, der sich nach unten auf eine größere Lenksäulenabmessung erweitert. Wie insbesondere aus der Fig. 6 erkennbar ist, fluchten die Kanten 24 des Prismas 22 und die Kanten 25 des pyramidenstumpfförmigen Abschnitts 23 miteinander.

Das Prisma 22 weist einseitig eine Nut 26 für den Eingriff der Schraube 8 auf. Diese Nut ist so ausgeführt, daß die Berührung zwischen der Schraube und der Lenksäule eine Linienberührung darstellt. In der Fig. 7 ist der Eingriff des kegelförmigen Abschnitts 14 der Schraube 8 in die Nut 26 angedeutet (gestrichelt dargestellt) .

Die nicht dargestellte Nabe für diese zweite Ausführungsform der Lenksäule weist eine Aufnahmeöffnung auf , die dem Prisma 22 und dem sich anschließenden erweiternden pyramidenstumpfförmigen Abschnitt 23 angepaßt ist. Dieser dem letzgenannten Abschnitt angepaßte Teil der Aufnahmeöffnung weist eine solche Länge auf, daß er diesen Abschnitt der Welle zumindest teilweise überdeckt. Dieser pyramidenstumpfförmige Abschnitt 23 stellt in dieser Ausführungsform den Anschlag für die Nabe dar.

## Patentansprüche

1. Vorrichtung zur Befestigung einer Lenkradnabe auf einer Lenksäule mittels einer quer zur Lenksäule (1, 21) verlaufenden Befestigungsschraube (8), die in der Nabe (2) geführt ist und einen kegelförmigen Abschnitt (14) zum Eingreifen in eine Nut (4) oder Rille (26) der Lenksäule (1, 21) aufweist, wobei die Nabe (2) oberhalb und unterhalb der Nut (4) oder Rille (26) formschlüssig an der LenkSäule (1, 21) anliegt,
**dadurch gekennzeichnet,**
**daß** die Achse (18) der Schraube (8) bei axialer Anlage der Nabe (2) an einem Anschlag (6) der Lenksäule (1, 21) höher als die Rillen- oder Mutmitte (20) der Lenksäule (1, 21) liegt und daß der Kegelwinkel des kegelförmigen Abschnitts (14) der Schraube (8) kleiner als 12⁰ ist.

2. Vorrichtung nach Anspruch 1, **dadurch gekennzeichnet, daß** die Achse (18) der Schraube (8) 0,5 mmm höher als die Nutmitte (20) an der Lenksäule (1) liegt.

3. Vorrichtung nach Anspruch 1 oder 2, **dadurch gekennzeichnet, daß** oberhalb und unterhalb der Rille oder Nut (4) zwischen der Lenksäule und der Nabe eine Verzahnung vorgesehen ist.

4. Vorrichtung nach mindestens einem der vorhergehenden Ansprüche, **dadurch gekennzeichnet, daß** der Anschlag (6) eben oder kegelförmig ist.

5. Vorrichtung nach Anspruch 1 oder 2, **dadurch gekennzeichnet, daß** die Lenksäule (21) im Befestigungsbereich der Nabe als Prisma (22) ausgebildet ist, dem sich ein pyramidenstumpfförmiger Abschnitt (23) anschließt, der sich nach unten auf einen größeren Querschnitt erweitert, wobei das Prisma (22) und der pyramidenstumpfförmige Abschnitt (23) dieselbe Anzahl Kanten (24, 25) aufweisen, die zueinander fluchten und daß die Nabe eine entsprechend ausgebildete Aufnahmeöffnung aufweist.

6. Vorrichtung nach Anspruch 5, **dadurch gekennzeichnet, daß** das Prisma (22) und der pyramidenstumpfförmige Abschnitt (23) jeweils sechs Kanten (24, 25) aufweisen.

7. Vorrichtung nach Anspruch 5 oder 6, **dadurch gekennzeichnet, daß** die Kanten (24, 25) abgerundet sind.

8. Vorrichtung nach mindestes einem der vorhergehenden Ansprüche, **dadurch gekennzeichnet, daß** die Nut (4) oder Rille (26) so ausgebildet ist, daß die Schraube (6) die Lenksäule (1, 21) nach ihrer Arretierung linienförmig berührt.

9. Vorrichtung nach mindestens einem der vorhergehenden Ansprüche, **dadurch gekennzeichnet, daß** die Schraube (8) mit Rechtsgewinde in Eindrehrichtung der Schraube (8) gesehen auf der rechten Seite der Achse der Lenksaule (1, 21) liegt.

10. Vorrichtung nach mindestens einem der vorhergehenden Ansprüche, **dadurch gekennzeichnet, daß** die Schraube (8) an beiden Enden des Kegelbereichs in zylindrischen Lagern (9, 11) gelagert ist.

## Claims

1. Device for fastening a steering wheel hub on a steering column using a fastening screw (8) which runs transversely to the steering column (1, 21), is guided in the hub (2) and has a conical section (14) for engagement in a groove (4) or channel (26) of the steering column (1, 21), the hub (2) bearing in a positive-locking manner against the steering column (1, 21) above and below the groove (4) or channel (26), **characterized in that** when the hub (2) bears axially against a stop (6) of the steering column (1, 21), the axis (18) of the screw (8) is situated higher than the channel or groove center (20) of the steering column (1, 21), and **in that** the angle of taper of the conical section (14) of the screw (8) is smaller than 12°.

2. Device according to claim 1, **characterized in that** the axis (18) of the screw (8) is situated 0.5 mmm [sic] higher than the groove center (20) on the steering column (1).

3. Device according to claim 1 or 2, **characterized in that** a toothing is provided between the steering column and the hub above and below the channel or groove (4).

4. Device according to at least one of the preceding claims, **characterized in that** the stop (6) is planar or conical.

5. Device according to claim 1 or 2, **characterized in that** in the fastening region of the hub the steering column (21) is designed as a prism (22) which is adjoined by a truncated pyramidal section (23) which widens downwards to a larger cross section, the prism (22) and the truncated pyramidal section (23) having the same number of edges (24, 25) which are aligned with one another, and **in that** the hub has a correspondingly designed receiving opening.

6. Device according to claim 5, **characterized in that** the prism (22) and the truncated pyramidal section (23) each have six edges (24, 25).

7. Device according to claim 5 or 6, **characterized in that** the edges (24, 25) are rounded.

8. Device according to at least one of the preceding claims, **characterized in that** the groove (4) or channel (26) is designed in such a manner that the screw (8) touches the steering column (1, 21) linearly after being locked in place.

9. Device according to at least one of the preceding claims, **characterized in that** the screw (8) lies with the right-hand thread on the right-hand side of the axis of the steering column (1, 21), as seen in the screwing-in direction of the screw (8).

10. Device according to at least one of the preceding claims, **characterized in that** the screw (8) is mounted in cylindrical bearings (9, 11) at both ends of the conical region.

## Revendications

1. Dispositif de fixation d'un moyeu de volant sur une colonne de direction au moyen d'une vis de fixation (8) s'étendant transversalement à la colonne de direction (1, 21), ladite vis étant guidée dans le moyeu (2) et présentant un tronçon (14) en forme de cône destiné à s'engager dans une gorge (4) ou dans une rainure (26) de la colonne de direction (1, 21), le moyeu (2) étant appliqué par coopération de formes contre la colonne de direction (1, 21), au-dessus et au-dessous de la gorge (4) ou de la rainure (26),
**caractérisé en ce que**
lorsque le moyeu (2) est en appui axial contre une butée (6) de la colonne de direction (1, 21), l'axe (18) de la vis (8) se trouve plus haut que le milieu (20) de la rainure ou de la gorge de la colonne de direction (1, 21) et **en ce que** l'angle conique du tronçon (14) en forme de cône de la vis (8) est inférieur à 12°.

2. Dispositif selon la revendication 1, **caractérisé en ce que** l'axe (18) de la vis (8) se trouve 0,5 mm plus haut que le milieu (20) de la gorge de la colonne de direction (1).

3. Dispositif selon l'une ou l'autre des revendications 1 et 2, **caractérisé en ce qu'**il est prévu une denture entre la colonne de direction et le moyeu, au-dessus et au-dessous de la rainure ou de la gorge (4).

4. Dispositif selon au moins l'une quelconque des revendications précédentes, **caractérisé en ce que** la butée (6) est plane ou en forme de cône.

5. Dispositif selon l'une ou l'autre des revendications 1 et 2, **caractérisé en ce que** la colonne de direction (21) est réalisée dans la zone de fixation du moyeu sous forme de prisme auquel se raccorde un tronçon (23) en forme de pyramide tronquée qui s'évase vers le bas sur une section transversale plus grande, le prisme (22) et le tronçon (23) en forme de pyramide tronquée présentant le même nombre d'arêtes (24, 25) qui sont alignement les unes par rapport aux autres, et **en ce que** le moyeu présente une ouverture de réception de réalisation correspondante.

6. Dispositif selon la revendication 5, **caractérisé en ce que** le prisme (22) et le tronçon (23) en forme de pyramide tronquée présentent chacun six arêtes (24, 25).

7. Dispositif selon l'une ou l'autre des revendications 5 et 6, **caractérisé en ce que** les arêtes (24, 25) sont arrondies.

8. Dispositif selon au moins l'une quelconque des revendications précédentes, **caractérisé en ce que** la gorge (4) ou la rainure (26) sont réalisée de telle sorte que la vis (8) touche de manière linéaire la colonne de direction (1, 21) après son blocage.

9. Dispositif selon au moins l'une quelconque des revendications précédentes, **caractérisé en ce que** la vis (8) avec filet à droite se trouve sur le côté droit de l'axe de la colonne de direction (1, 21), vu en direction de vissage de la vis (8).

10. Dispositif selon au moins l'une quelconque des revendications précédentes, **caractérisé en ce que** la vis (8) est montée dans des paliers (9, 11) aux deux extrémités de la zone conique.
